(19) **Europäisches Patentamt / European Patent Office / Office européen des brevets**

(11) **EP 4 195 457 B1**

(12) # EUROPEAN PATENT SPECIFICATION

(45) Date of publication and mention
of the grant of the patent:
**10.12.2025  Bulletin 2025/50**

(21) Application number: **21306750.7**

(22) Date of filing: **10.12.2021**

(51) International Patent Classification (IPC):
*H02K 15/165* (2025.01)     *H02K 1/24* (2006.01)
*H02K 1/28* (2006.01)     *H02K 7/00* (2006.01)
*H02K 19/00* (2006.01)

(52) Cooperative Patent Classification (CPC):
**H02K 15/165; H02K 1/24; H02K 1/28; H02K 7/003;**
H02K 19/00

(54) **SYSTEM COMPRISING A ROTOR AND BEARINGS AND ASSOCIATED METHOD**

SYSTEM MIT EINEM ROTOR UND LAGERN UND DAZUGEHÖRIGES VERFAHREN

SYSTÈME COMPRENANT UN ROTOR ET DES PALIERS ET PROCÉDÉ ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023  Bulletin 2023/24**

(73) Proprietor: **GE Energy Power Conversion
Technology Ltd
Rugby, Warwickshire CV21 1BD (GB)**

(72) Inventors:
• **DURANTAY, Lionel
54250 CHAMPIGNEULLES (FR)**
• **GROSSELIN, Christophe
54250 CHAMPIGNEULLES (FR)**

• **LACOUR, Yves
54250 CHAMPIGNEULLES (FR)**
• **HOURDEAUX, Samuel
54250 CHAMPIGNEULLES (FR)**
• **GRÉGOIRE, Adam
54250 CHAMPIGNEULLES (FR)**

(74) Representative: **Casalonga
Casalonga & Partners
Bayerstraße 71/73
80335 München (DE)**

(56) References cited:
**US-A- 2 064 033          US-A- 4 510 679
US-A1- 2011 080 068**

## Description

The present invention concerns systems comprising non-through shaft rotors maintained in rotation by bearings and a method for dimensioning such systems.

Document US2011/0080068 discloses a two poles rotor comprising a magnetic pass including a plurality of stacked laminations, the magnetic mass being tightly held between two end flanges and stud members.

The stud members pass through the centre of laminations and connected the two end flanges.

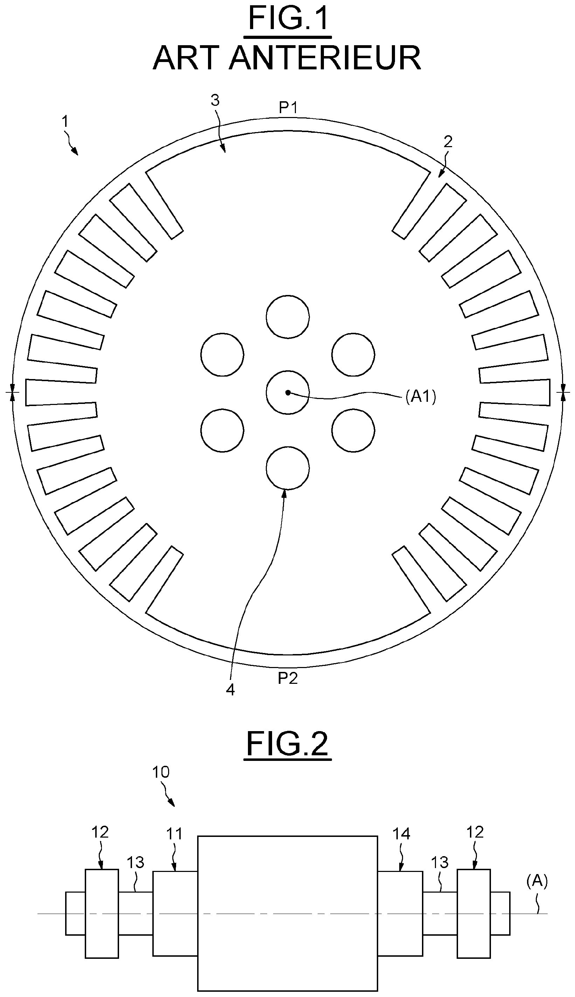

Figure 1 illustrates a radial section of the magnetic mass of the rotor 1.

The magnetic mass comprises slots 2 disposed on a diameter of the magnetic mass and extending along the magnetic mass in an axial direction coincident with an axis (A1) coincident with the axis of rotation of the rotor and merging outwards in a radial direction perpendicular to the axis (A1).

Each slot 2 houses a winding (not represented).

The slot 2 are arranged to form a first pole P1 and a second pole P2.

Each pole P1, P2 further comprises a massive area 3 separating two rows of slots 2 of one pole P1, P2.

The stud members 4 pass through the centre of laminations and connected the two end flanges.

Generally, the rotor 1 is anisotropic so that the shafting of the rotor 1 is asymmetric.

The stiffness, the mass and the damping of a first area defined by two adjacent rows of the slots of the poles P1, P2 and the massive area 3 are different so that the dynamic differential equation of bending of the rotor 1 has periodic coefficients of stiffness, damping and masses varying periodically two times per revolution of the rotor 1.

The stiffness, the mass and the damping variations of the rotor 1 may cause gravitational sags when alternatively, the first zone and the massive zone are subject to a gravitational field.

The rotor 1 may be subjected to self-excited vibrations.

The self-excited vibrations generate parametric instabilities in certain specific ranges of rotational speed of the rotor 1 depending on the critical speed of the rotor 1, the critical speed being defined with the average value of rotor stiffness and rotor mass. The dynamic differential equation of bending of the rotor 1 has in this case periodic coefficients of stiffness, damping and masses varying periodically two times per revolution.

In order to reduce the anisotropy of the rotor 1, circumferential striations are machined on the surface of the magnetic mass.

However, parametric instabilities may also be generated or amplified by elements outside the rotor 1 for example bearings maintaining the rotor 1 in rotation, foundations on which the bearings rest which are not taken into account for the dimensioning of the striations. Further prior-art is US4510679A and US2064033A.

It is therefore proposed to remedy the disadvantages related to the method to minimize the anisotropy of rotors according to the prior art with an improved dimensioning method taking into account elements connected the rotors.

In view of the foregoing the invention proposes a system comprising a rotor for a rotating electric machine and bearings maintaining the rotor in rotation, the rotor being a non-through shaft comprising two half-shafts holding tightly a cylindrical magnetic mass comprising a plurality of stacked laminations, circumferential tie rods distributed uniformly over a first diameter of the magnetic mass so as to keep the magnetic mass compacted between the half-shafts, slots regularly disposed on portions of a second diameter of the magnetic mass and extending along the magnetic mass in an axial direction and merging outwards in a radial direction, windings housed in the slots to form at least two magnetic poles, each slot being closed by a wedge.

The rotor further comprises polar tie rods distributed in an angular sector of each pole with respect to a rotation axis of the rotor so as to keep the magnetic mass compacted between the half-shafts and to stabilize the rotor in rotation according to the bearings, each angular sector comprising the same number of polar tie rods.

Preferably, the polar tie rods are distributed uniformly over a first diameter of the magnetic mass in each angular sector.

Advantageously, the rotor comprises four poles.

Preferably, the magnetic mass comprises balancing laminations including a plurality of holes located on an outer circumference of the balancing lamination between the plurality of slots.

Advantageously, the system comprises a balancing lamination at each end of the magnetic mass and one balancing lamination in the middle of the magnetic mass according to a longitudinal direction of the rotor.

Preferably, the bearings comprise active magnetic bearings.

Advantageously, the bearings comprise lubricated oil bearings.

Another object of the invention relates to a rotating electric machine comprising a system as defined above.

Another object of the invention relates to a method for enhancing a system comprising a two poles rotor for a rotating electric machine and bearings maintained the rotor in rotation, the rotor being a non-through shaft comprising two half-shafts holding tightly a cylindrical magnetic mass comprising a plurality of stacked laminations, circumferential tie rods distributed uniformly over a first diameter of the magnetic mass so as to keep the magnetic mass compacted between the half-shafts, slots regularly disposed on portions of a second diameter of the magnetic mass and extending along the magnetic mass in an axial direction and merging outwards in a radial direction, windings housed in the slots to form the two magnetic poles, each slot being closed by a wedge.

The method comprises the addition of polar tie rods distributed in an angular sector of each pole with respect to a rotation axis of the rotor so as to keep the magnetic mass compacted between the half-shafts and to stabilize the rotor in rotation according to the bearings, each angular sector comprising the same number of polar tie rods.

Preferably, the addition of polar tie rods comprises:

- (a) determining a configuration of polar tie rods comprising a predetermined number of polar tie rods, a predetermined location of polar tie rods in each angular sector and a predetermined mechanical pretension of the polar tie rods,
- (b) determining an interval of unstable rotation speeds in which the rotor maintained in rotation by the bearings may be unstable according to a first rotation speed dependant equivalent stiffness matrix, a second rotation speed dependant equivalent stiffness matrix, a first mass matrix and a second mass matrix, the first rotation speed dependant equivalent stiffness matrix and the first mass matrix being determined from a first rotor model, the second rotation speed dependant equivalent stiffness matrix and the second mass matrix being determined from a second rotor model, the first rotor model being determined according to the slots, the windings, the wedges and the circumferential tie rods and the second rotor model being determined according to the circumferential tie rods and the polar tie rods,
- (c) determining an absolute difference matrix between a first rotation speed dependent equivalent damping matrix and a second rotation speed dependent equivalent damping matrix, the first rotation speed dependent equivalent damping matrix being dependant of the first mass matrix and the first rotation speed dependent equivalent stiffness matrix and the second rotation speed dependent equivalent damping matrix being dependant of the second mass matrix and the second rotation speed dependent equivalent stiffness matrix,
- (d) comparing the absolute difference matrix to rotation speed dependent damping matrix of the bearings,

if the nominal rotation speed of the rotor is in the interval of unstable rotation speeds and a value of the absolute difference matrix is greater than the corresponding value of the speed dependent damping matrix of the bearings, the rotor being considered as unstable, and if the nominal rotation speed of the rotor is outside the interval of unstable rotation speeds or any value of the absolute difference matrix is greater than the corresponding value of the speed dependent damping matrix of the bearings, the rotor being considered as stable.

Advantageously, if the rotor is considered as instable, a new configuration of polar tie rods is determined and steps (b) to (d) are repeated until the rotor is considered as stable.

Preferably, the determination of the first rotation speed dependant equivalent stiffness matrix, the second rotation speed dependant equivalent stiffness matrix, the first mass matrix and the second mass matrix comprise:

- defining the first rotor model in which the slots are regularly disposed on the second diameter of the magnetic mass, the slots housing the windings and being closed by the wedges,
- determining the free mode frequency of forward precession gyroscopic effect of the first rotor according to the rotation speed of the first rotor,
- determining the first mass matrix of the first rotor,
- determining the first rotor stiffness matrix according to the free mode frequency of forward precession gyroscopic effect of the first rotor and the first mass matrix,
- defining the second rotor model in which the angular sectors are duplicated on the full periphery of the second rotor model so that polar tie rods are regularly disposed on a full radial section of the second rotor model,
- determining the free mode frequency of forward precession gyroscopic effect according the rotation speed of the second rotor,
- determining a second mass matrix of the second rotor,
- determining the second rotor stiffness matrix according to the free mode frequency of forward precession gyroscopic effect of the second rotor and the second mass matrix,

the first rotation speed dependant equivalent stiffness matrix being equal to the addition of the first rotor stiffness matrix and a speed dependent stiffness matrix of the bearings, and the second rotation speed dependant equivalent stiffness matrix being equal to the addition of the second rotor stiffness matrix and a speed dependent stiffness matrix of the bearings.

Advantageously, determining an interval of unstable rotation speeds comprises determining an average circular natural pulsation and a rotor asymmetric coefficient from the first and second rotation speed dependant equivalent stiffness matrices, and the first and second mass matrices,

the lower bound of the interval being equal to the average circular natural pulsation multiplied by square root of one minus the rotor asymmetric coefficient, and

the upper bound of the interval being equal to the average circular natural pulsation multiplied by square root of one plus the rotor asymmetric coefficient.

Other characteristics and advantages of the

5 **EP 4 195 457 B1** 6

invention will emerge on reading the following description of embodiments of the invention, provided solely by way of non-limiting examples and with reference to the drawings in which:

Figure 1 illustrates a section of a two poles rotor according to the prior art,
Figure 2 illustrates an example of a rotary electrical machine according to the invention,
Figures 3, 4 and 5 illustrate an example of a magnetic mass of the rotary electrical machine according to the invention,
Figure 6 illustrates an example of a method for dimensioning a system according to the invention,
Figure 7 illustrates an example of a dynamic model of the system according to the invention,
Figure 8 illustrates an example of a section of a first rotor model according to the invention,
Figure 9 illustrates an example of modelling of the first rotor model according to the invention, and
Figure 10 illustrates an example of a section of a second rotor model according to the invention.

Figure 2 illustrates an example of a rotary electrical machine 10 comprising a two poles rotor 11 maintained in rotation by two bearings 12.

The rotor 11 and the two bearings 12 form a system.

The bearings 12 comprise magnetic active bearings.

In another embodiment, the bearings 12 comprise lubricated oil bearings.

The rotor 11 is a wounded rotor comprising windings and comprises an axis (A) coincident with the axis of rotation of the rotor 11.

The rotor 11 is a non-through shaft comprising two half-shafts 13 holding tightly a cylindrical magnetic mass 14 comprising a plurality of stacked laminations.

The two half-shafts 13 are identical.

In another embodiment, the two half-shafts 13 are different.

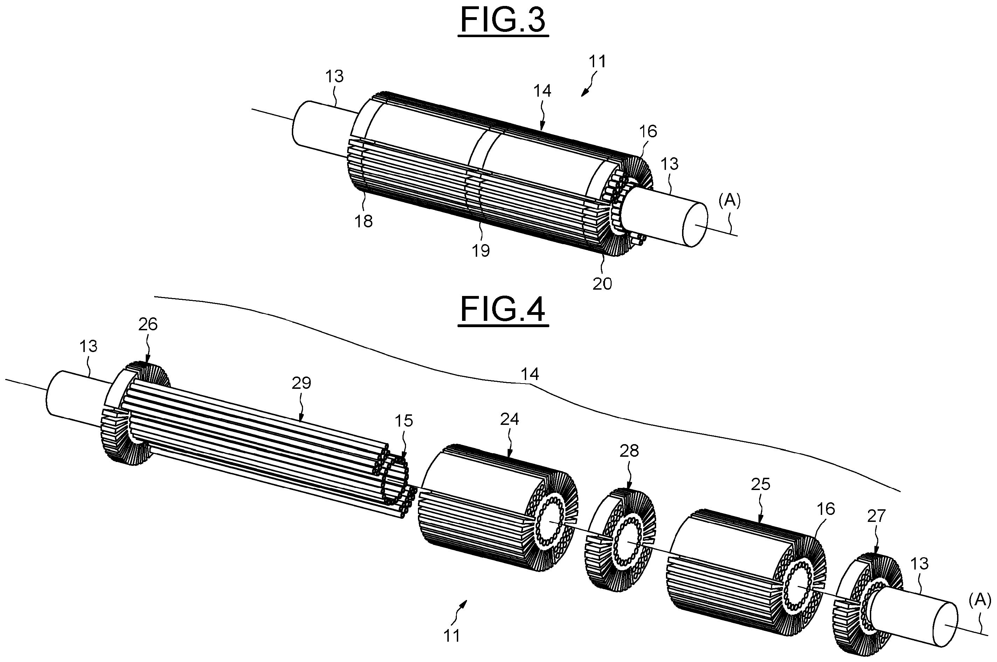

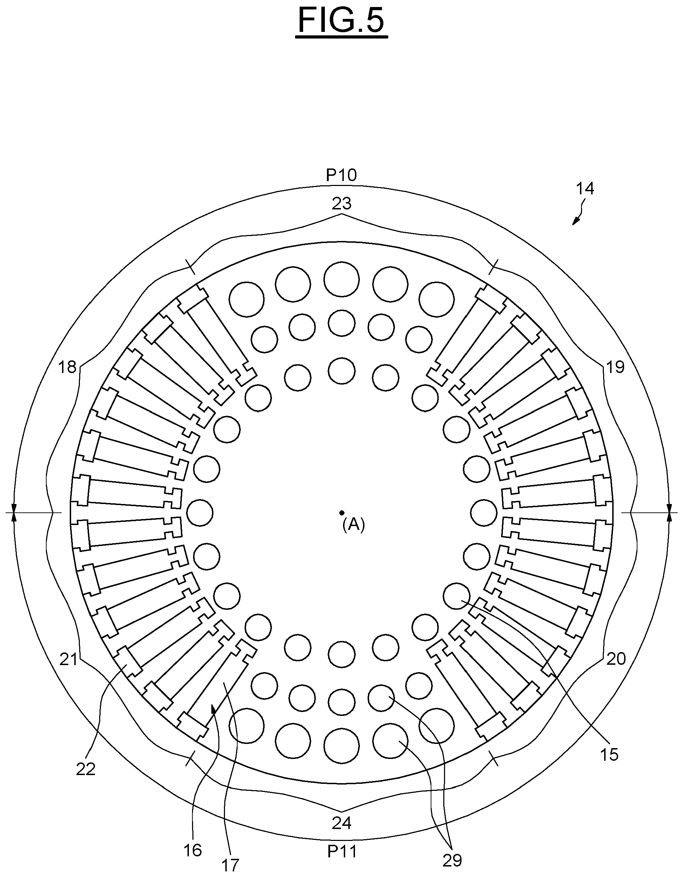

Figures 3, 4 and 5 illustrate respectively a view, an exploded view and a radial section of an example of a magnetic mass 14 of the rotor 11.

The rotor 11 comprises circumferential tie rods 15 distributed uniformly over a first diameter of the magnetic mass 14 and maintaining the stacked laminations of the magnetic mass 14 compacted between the two half-shafts 13.

The magnetic mass 14 comprises slots 16 housing windings 17 and disposed in rows on portions 18, 19, 20, 21 of a second diameter of the magnetic mass 14.

The slots 16 extend along the magnetic mass 14 in an axial direction and merge outwards in a radial direction of the rotor 11 so that the slots 16 and the windings 17 form two magnetic poles P10, P11.

Each slot 16 is closed by a wedge 22.

Each magnetic pole P10, P11 comprises a first portion 18, 20 and a second portion 19, 21 of slots 16 housing windings 17 separated by a massive portion 23, 24.

The first portion 18 of a first magnetic pole P10 being adjacent to the second portion 21 of the second magnetic pole P11, and the second portion 19 of the first magnetic pole P10 being adjacent to the first portion 20 of the second magnetic pole P11.

The magnetic mass 14 comprises two identical stacks of laminations 24, 25 and balancing laminations 26, 27, 28 including a plurality of holes located on an outer circumference of the balancing lamination between the plurality of slots 16.

The thickness of the balancing laminations 26, 27, 28 have a thickness greater than the thickness of the stacked laminations.

The number and thickness of balancing laminations 26, 27, 28 and the number of holes in the balancing laminations 26, 26, 28 are selected to provide adequate balance capability over the entire speed range over which the rotor 11 is used in service.

As illustrated, the magnetic mass 14 comprises tree balancing laminations 26, 27, 28, a first and a second balancing laminations 26, 27 being at each end of the magnetic mass 14, and the third balancing laminations 28 being in the middle of the magnetic mass 14 separating the two stacks of laminations 24, 25.

The rotor 11 further comprises polar tie rods 29 distributed in an angular sector of each pole with respect to the rotation axis (A) of the rotor 11 so as to keep the magnetic mass compacted between the half-shafts 13 and to stabilize the rotor 11 in rotation according to the bearings 12.

Each angular sector comprises the same number of polar tie rods 29.

The angular sector of each pole P10, P11 covers the massive portion 23, 24 of each pole P10, P11.

The location, the diameter, the number of polar tie rods and the pretension of the polar tie rods 29 are determined to compensate the anisotropy of the rotor 11 in the range of used of the machine 10.

The addition of polar tie rods 29 in the rotor 11 permits to minimize the rotor 11 asymmetries and avoid instabilities of the rotor 11 in the range of use.

In the following, a method for dimensioning the system comprising the two poles rotor 11 and bearings 12 is exposed.

The polar tie rods 29 are distributed uniformly in the massive portions 23, 24 over two diameters of the magnetic mass 14.

In another embodiment, the polar tie rods 29 may be distributed in the massive portions 23, 24 over one or more than two diameters of the magnetic mass 14.

In another embodiment, the rotor 11 may comprise four magnetic poles.

As the rotor 11 comprising four magnetic poles is intrinsically stable, an example of a method for dimen-

4

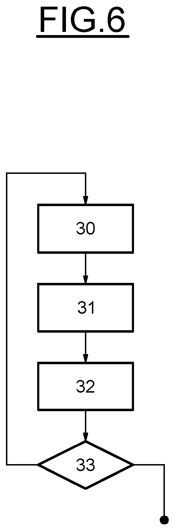

sioning the system comprising the two poles rotor 11 and the bearings 12 maintaining the rotor 11 in rotation by adding the polar tie rods 29 is presented on figure 6.

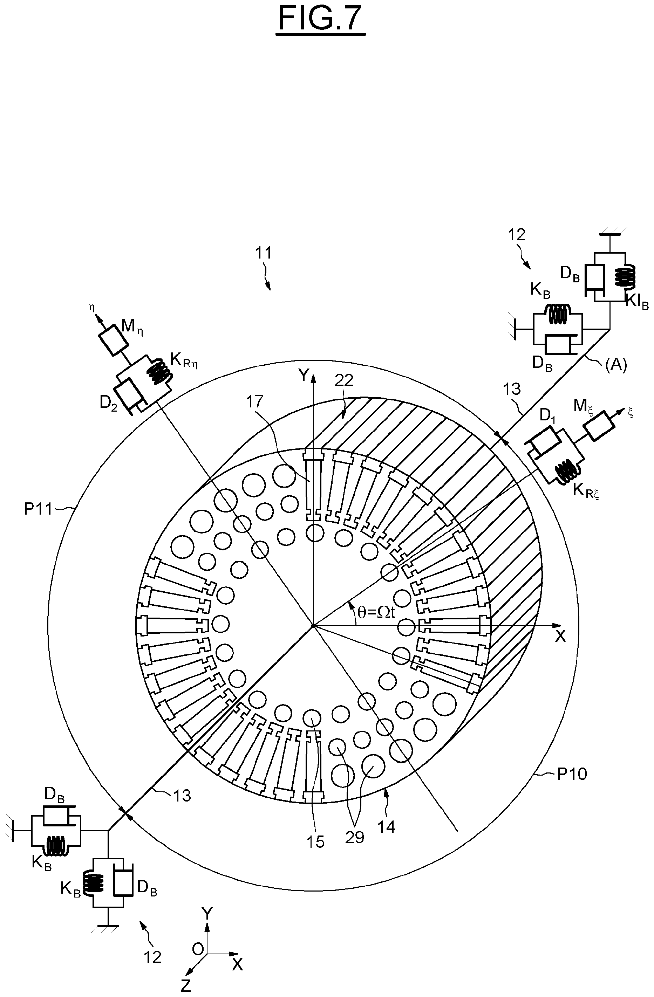

Figure 7 illustrates a dynamic model of the rotor 11 maintained in rotation by the bearings 12 in a fix coordinate system (O, X, Y).

The anisotropic rotor 11 comprises an orthogonal rotating coordinate system (G, $\xi$, $\eta$) defining an angle $\theta$ equal to the time t multiplied by the rotation speed $\Omega$ of the rotor 11.

The origin G is juxtaposed with the gravity centre of the rotor 11. The axis $\xi$ separates the first and second portions 18, 19 of the first magnetic pole P10 and the first and second portions 20, 21 of the second magnetic pole P11. The axis $\eta$ goes through the centre of the massive portions 23, 24 of the magnetic poles P10, P11.

As the rotor 11 is anisotropic, the first and second portions 18, 19, 20, 21 of the magnetic poles P10, P11 are represented by a mass matrix $M_\xi$, a stiffness matrix $K_{R\xi}$ and an equivalent damping matrix D1, and the massive portions 23, 24 of the magnetic poles P10, P11 are represented by a mass matrix $M_\eta$, a stiffness matrix $K_R\eta$, and an equivalent damping matrix D2.

To simplify the explanations, the bearings 12 are represented by a stiffness coefficient $K_B$ along the X and Y, and a damping coefficient $D_B$ along the X and Y axis.

The stiffness matrices $K_{R\xi}$, $K_R\eta$, and the equivalent damping matrices D1, D2, the stiffness coefficient $K_B$ and damping coefficient $D_B$ are dependent on the rotation speed $\Omega$ of the rotor 11.

During a step 30 (figure 6), a configuration of polar tie rods 29 comprising a predetermined number of polar tie rods, a predetermined location of polar tie rods in each angular sector and a predetermined mechanical pretension of the polar tie rods is defined, for example as illustrated on figures 2 to 6.

In step 31, an interval INT of unstable rotation speeds in which the rotor 11 maintained in rotation by the bearings 12 may be unstable is determined.

As the rotor 11 is anisotropic, the mass of the rotor 11 and the stiffness of the rotor 11 is dependent on the value of the angle $\theta$ in the fundamental equation of dynamics.

According to the generalized Mathieu's equation, the own pulsation $\omega_\xi$ of the system according to the axis $\xi$ is equal to:

$$\omega_\xi = \sqrt{\frac{K_\xi}{M_\xi} - \frac{D_B^2}{4M_\xi}} \qquad (1)$$

where

$$K_\xi = \frac{1}{\frac{1}{K_{R\xi}} + \frac{1}{K_B}} \qquad (2)$$

$K_\xi$ being a first rotation speed dependant equivalent stiffness matrice.

The own pulsation $\omega\eta$ of the system according to the axis $\eta$ is equal to:

$$\omega_\eta = \sqrt{\frac{K_\eta}{M_\eta} - \frac{D_B^2}{4M_\eta}} \qquad (3)$$

where

$$K_\eta = \frac{1}{\frac{1}{K_{R\eta}} + \frac{1}{K_B}} \qquad (4)$$

$K\eta$ being a second rotation speed dependant equivalent stiffness matrice.

An average circular natural pulsation $\omega_0$ and a rotor asymmetric coefficient $\mu$ are defined.

The average circular natural pulsation $\omega_0$ is equal to:

$$\omega_0^2 = \frac{\omega_\xi^2 + \omega_\eta^2}{2} \qquad (5)$$

The rotor asymmetric coefficient $\mu$ is equal to

$$\mu = \frac{\left|\omega_\eta^2 - \omega_\xi^2\right|}{2\omega_0^2} \qquad (6)$$

The interval INT is equal to:

$$INT = \left[\omega_0\sqrt{1-\mu} \, ; \omega_0\sqrt{1+\mu}\right] \qquad (7)$$

The rotation speed dependant equivalent stiffness matrix $K_{R\xi}$ and the first mass matrix $M_\xi$ are determined from a first rotor model.

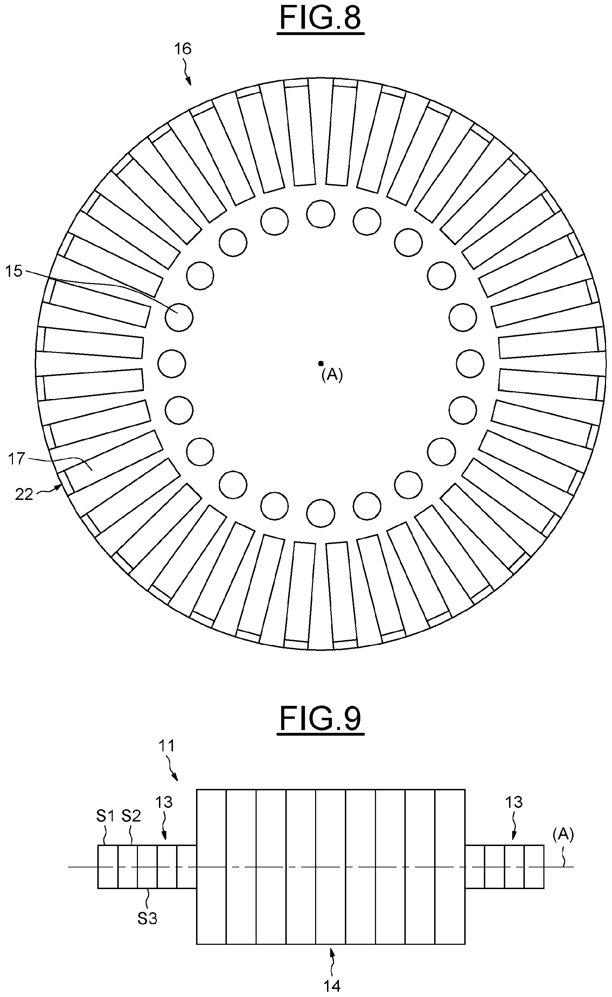

Figure 8 illustrates an example of a section of the magnetic mass of the first rotor model.

The first rotor model differs from the model of the rotor 11 in that the slots 16 are regularly disposed on the second diameter of the magnetic mass. The slots 16 house the windings 17 and are closed by the wedges 22.

The first rotor model is isotropic so that an available algorithm may be used to compute mechanical and dynamical features of the first rotor model, for example using an available finite element analysis algorithm.

To determine the rotation speed dependant equivalent stiffness matrix $K_{R\xi}$ and the first mass matrix $M_\xi$, the first rotor model is axially sliced to obtain slices Si, i being an integer (figure 9).

Each slice Si of the first model of the rotor is modelled by a beam to simplify the modelling of the first rotor model.

The finite analysis algorithm is used to determine the free mode frequency F1 of forward precession gyroscopic effect of the first rotor model according to the rotation speed of the first rotor and the first mass matrix $M_\xi$ of the first rotor model.

The modelling of the first rotor model in beams permits to simplify the computation of the free mode frequency F1 of forward precession gyroscopic effect and the first mass matrix.

The rotation speed dependant equivalent stiffness matrix $K_{R\xi}$ is equal to:

$$K_{R\xi} = 2\pi F1 \quad (8)$$

The second rotor model differs from the model of the rotor 11 in that the angular sectors of the magnetic poles P10, P11 are duplicated on the full periphery of the rotor so that polar tie rods 29 are regularly disposed on a full radial section of the second rotor model.

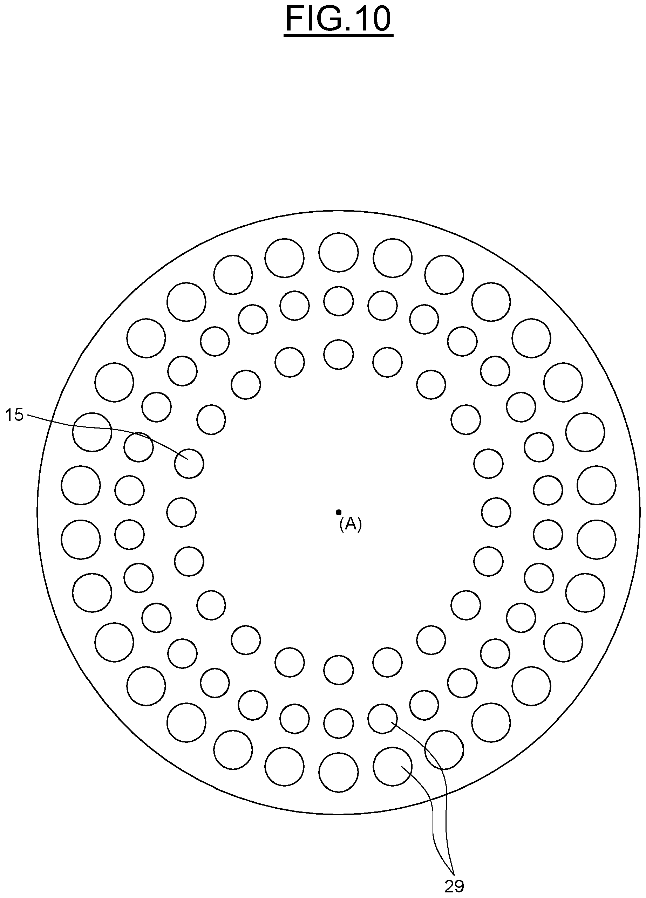

An example of the second rotor model is illustrated on figure 10.

Analogously to the first rotor model, the second rotor model is sliced and each slice is modelled by a beam.

The finite analysis algorithm is used to determine the free mode frequency F2 of forward precession gyroscopic effect of the second rotor model according to the rotation speed of the second rotor model and the second mass matrix $M\eta$ of the second rotor model.

The rotation speed of the first and second rotor models and the rotor 11 is equal and is defined by a predetermined speed interval, the rotation speed varying to cover the full predetermined speed interval.

The rotation speed dependant equivalent stiffness matrix $K_R\eta$ is equal to:

$$K_{R\eta} = 2\pi F2 \quad (9)$$

During step 32 (figure 6), an absolute difference matrix DIFF between a first rotation speed dependent equivalent damping matrix D1 and a second rotation speed dependent equivalent damping matrix D2 is determined.

The first rotation speed dependent equivalent damping matrix D1 is equal to:

$$D1 = \sqrt{M_\xi K_\xi} \quad (10)$$

The second rotation speed dependent equivalent damping matrix D2 is equal to:

$$D1 = \sqrt{M_\eta K_\eta} \quad (11)$$

and the absolute difference matrix DIFF is equal to:

$$DIFF = |D1 - D2| \quad (12)$$

where | | is the operator absolute value.

In step 33, the absolute difference matrix DIFF is compared to the rotation speed dependent damping matrix $D_B$ of the bearings 12.

If the nominal rotation speed of the rotor is in the interval of unstable rotation speeds INT and a value of the absolute difference matrix DIFF is greater than the corresponding value of the speed dependent damping matrix $D_B$ of the bearings, the rotor 11 is considered as unstable.

It continues to step 30. A new configuration of polar tie rods is determined.

If the nominal rotation speed of the rotor is outside the interval of unstable rotation speeds INT or any value of the absolute difference matrix DIFF is greater than the corresponding value of the speed dependent damping matrix of the bearings, the rotor being considered as stable.

The design of the rotor 11 is kept.

The disclosed method permits to enhance the dynamic of the rotor 11 by adding polar tie rods.

## Claims

1. System comprising a rotor (11) for a rotating electric machine (10) and bearings (12) maintaining the rotor in rotation, the rotor being a non-through shaft comprising two half-shafts (13) holding tightly a cylindrical magnetic mass (14) comprising a plurality of stacked laminations, circumferential tie rods (15) distributed uniformly over a first diameter of the magnetic mass so as to keep the magnetic mass compacted between the half-shafts, slots (16) regularly disposed on portions of a second diameter of the magnetic mass and extending along the magnetic mass in an axial direction and merging outwards in a radial direction, windings (17) housed in the slots to form at least two magnetic poles (P10, P11), each slot being closed by a wedge (22), wherein the rotor further comprises polar tie rods (29) distributed in an angular sector of each pole with respect to a rotation axis of the rotor so as to keep the magnetic mass compacted between the half-shafts and to stabilize the rotor in rotation according to the bearings, each angular sector comprising the same number of polar tie rods.

2. System according to claim 1, in which the polar tie rods (29) are distributed uniformly over a first diameter of the magnetic mass in each angular sector.

3. System according to claim 1 or 2, in which the rotor comprises four poles.

4. System according to any of claims 1 to 3, in which the magnetic mass comprises balancing laminations (26, 27, 28) including a plurality of holes located on an outer circumference of the balancing lamination between the plurality of slots (16).

5. System according to claim 4, comprising a balancing lamination (26, 27) at each end of the magnetic mass and one balancing lamination (28) in the middle of the magnetic mass (14) according to a longitudinal direction of the rotor.

6. System according to any of claims 1 to 5, in which the bearings (12) comprise active magnetic bearings.

7. System according to any of claims 1 to 5, in which the bearings (12) comprise lubricated oil bearings.

8. Rotating electric machine (10) comprising a system according to any of claims 1 to 7.

9. Method for enhancing the dynamic of a system comprising a two poles rotor (11) for a rotating electric machine (10) and bearings (12) maintained the rotor in rotation, the rotor being a non-through shaft comprising two half-shafts (13) holding tightly a cylindrical magnetic mass (14) comprising a plurality of stacked laminations, circumferential tie rods (15) distributed uniformly over a first diameter of the magnetic mass so as to keep the magnetic mass compacted between the half-shafts, slots (16) regularly disposed on portions of a second diameter of the magnetic mass and extending along the magnetic mass in an axial direction and merging outwards in a radial direction, windings (17) housed in the slots to form the two magnetic poles (P10, P11), each slot being closed by a wedge (22), wherein the method comprises the addition of polar tie rods (29) distributed in an angular sector of each pole with respect to a rotation axis of the rotor so as to keep the magnetic mass compacted between the half-shafts and to stabilize the rotor in rotation according to the bearings, each angular sector comprising the same number of polar tie rods.

10. Method according to claim 9, in which the addition of polar tie rods comprises:

- (a) determining a configuration of polar tie rods (29) comprising a predetermined number of polar tie rods, a predetermined location of polar tie rods in each angular sector and a predetermined mechanical pretension of the polar tie rods,
- (b) determining an interval of unstable rotation speeds in which the rotor (11) maintained in rotation by the bearings (12) may be unstable according to a first rotation speed dependant equivalent stiffness matrix, a second rotation speed dependant equivalent stiffness matrix, a first mass matrix and a second mass matrix, the first rotation speed dependant equivalent stiffness matrix and the first mass matrix being determined from a first rotor model, the second rotation speed dependant equivalent stiffness matrix and the second mass matrix being determined from a second rotor model, the first rotor model being determined according to the slots (16), the windings (17), the wedges (22), and the circumferential tie rods (29), and the second rotor model being determined according to the circumferential tie rods and the polar tie rods,

- (c) determining an absolute difference matrix between a first rotation speed dependent equivalent damping matrix and a second rotation speed dependent equivalent damping matrix, the first rotation speed dependent equivalent damping matrix being dependant of the first mass matrix and the first rotation speed dependent equivalent stiffness matrix and the second rotation speed dependent equivalent damping matrix being dependant of the second mass matrix and the second rotation speed dependent equivalent stiffness matrix,

- (d) comparing the absolute difference matrix to rotation speed dependent damping matrix of the bearings,

if the nominal rotation speed of the rotor (11) is in the interval of unstable rotation speeds and a value of the absolute difference matrix is greater than the corresponding value of the speed dependent damping matrix of the bearings (12), the rotor being considered as unstable, and if the nominal rotation speed of the rotor is outside the interval of unstable rotation speeds or any value of the absolute difference matrix is greater than the corresponding value of the speed dependent damping matrix of the bearings, the rotor being considered as stable.

11. Method according to claim 10, in which if the rotor (11) is considered as instable, a new configuration of polar tie rods is determined and steps (b) to (d) are repeated until the rotor is considered as stable.

12. Method according to claim 10 or 11, in which the determination of the first rotation speed dependant equivalent stiffness matrix, the second rotation speed dependant equivalent stiffness matrix, the first mass matrix and the second mass matrix comprise:

- defining the first rotor model in which the slots (16) are regularly disposed on the second diameter of the magnetic mass, the slots housing the windings (17) and being closed by the wedges (22),
- determining the free mode frequency of forward precession gyroscopic effect of the first rotor according to the rotation speed of the first rotor,

- determining the first mass matrix of the first rotor,

- determining the first rotor stiffness matrix according to the free mode frequency of forward precession gyroscopic effect of the first rotor and the first mass matrix,

- defining the second rotor model in which the angular sectors are duplicated on the full periphery of the second rotor model so that polar tie rods (29) are regularly disposed on a full radial section of the second rotor model,

- determining the free mode frequency of forward precession gyroscopic effect according the rotation speed of the second rotor,

- determining a second mass matrix of the second rotor,

- determining the second rotor stiffness matrix according to the free mode frequency of forward precession gyroscopic effect of the second rotor and the second mass matrix,

the first rotation speed dependant equivalent stiffness matrix being equal to the addition of the first rotor stiffness matrix and a speed dependent stiffness matrix of the bearings, and the second rotation speed dependant equivalent stiffness matrix being equal to the addition of the second rotor stiffness matrix and a speed dependent stiffness matrix of the bearings.

13. Method according to any of claims 10 to 12, in which determining an interval of unstable rotation speeds comprises determining an average circular natural pulsation and a rotor asymmetric coefficient from the first and second rotation speed dependant equivalent stiffness matrices, and the first and second mass matrices,

the lower bound of the interval being equal to the average circular natural pulsation multiplied by square root of one minus the rotor asymmetric coefficient, and
the upper bound of the interval being equal to the average circular natural pulsation multiplied by square root of one plus the rotor asymmetric coefficient.

## Patentansprüche

1. System umfasst einen Rotor (11) für eine elektrische Drehmaschine (10) und Lager (12), die den Rotor in Drehung halten, wobei der Rotor eine nicht durchgehende Welle ist, die zwei Halbwellen (13) umfasst, die eine zylindrische magnetische Masse (14) festhalten, die eine Vielzahl von gestapelten Laminierungen umfasst, umlaufende Zugstangen (15), die gleichmäßig über einen ersten Durchmesser der magnetischen Masse verteilt sind, um die magnetische Masse zwischen den Halbwellen verdichtet zu halten, Schlitze (16), die gleichmäßig an Abschnitten eines zweiten Durchmessers der magnetischen Masse angeordnet sind und sich entlang der magnetischen Masse in axialer Richtung erstrecken und in radialer Richtung nach außen zusammenlaufen, sowie Wicklungen (17) umfasst, die in den Schlitzen untergebracht sind, um mindestens zwei magnetische Pole (P10, P11) zu bilden, wobei jeder Schlitz durch einen Keil (22) verschlossen ist,
wobei der Rotor ferner polare Zugstangen (29) umfasst, die in einem Winkelsektor jedes Pols in Bezug auf eine Drehachse des Rotors verteilt sind, um die magnetische Masse zwischen den Halbwellen verdichtet zu halten und den Rotor in Drehung entsprechend den Lagern zu stabilisieren, wobei jeder Winkelsektor die gleiche Anzahl von polaren Zugstangen umfasst.

2. System nach Anspruch 1, wobei die polaren Zugstangen (29) gleichmäßig über einen ersten Durchmesser der magnetischen Masse in jedem Winkelsektor verteilt sind.

3. System nach Anspruch 1 oder 2, wobei der Rotor vier Pole umfasst.

4. System nach einem der Ansprüche 1 bis 3, wobei die magnetische Masse Ausgleichslaminierungen (26, 27, 28) umfasst, die eine Vielzahl von Löchern enthalten, die sich an einem äußeren Umfang der Ausgleichslaminierung zwischen der Vielzahl von Schlitzen (16) befinden.

5. System nach Anspruch 4, das eine Ausgleichslaminierung (26, 27) an jedem Ende der magnetischen Masse und eine Ausgleichslaminierung (28) in der Mitte der magnetischen Masse (14) gemäß einer Längsrichtung des Rotors umfasst.

6. System nach einem der Ansprüche 1 bis 5, wobei die Lager (12) aktive magnetische Lager umfassen.

7. System nach einem der Ansprüche 1 bis 5, wobei die Lager (12) geschmierte Öllager umfassen.

8. Elektrische Drehmaschine (10), die ein System nach einem der Ansprüche 1 bis 7 umfasst.

9. Verfahren zum Verbessern der Dynamik eines Systems, das einen zweipoligen Rotor (11) für eine elektrische Drehmaschine (10) und Lager (12), die den Rotor in Drehung halten umfasst, wobei der Rotor eine nicht durchgehende Welle ist, die zwei Halbwellen (13) umfasst, die eine zylindrische magnetische Masse (14) festhalten, die eine Vielzahl von gestapelten Laminierungen umfasst, umlaufende Zugstangen (15), die gleichmäßig über einen ersten Durchmesser der magnetischen Masse verteilt sind, um die magnetische Masse zwischen den Halbwellen verdichtet zu halten, Schlitze (16), die gleichmäßig an Abschnitten eines zweiten Durchmessers der magnetischen Masse angeordnet sind und sich entlang der magnetischen Masse in axialer Richtung erstrecken und in radialer Richtung nach außen zusammenlaufen, sowie Wicklungen (17) umfasst, die in den Schlitzen untergebracht sind, um die beiden magnetischen Pole (P10, P11) zu bilden, wobei jeder Schlitz durch einen Keil (22) verschlossen ist, wobei wobei das Verfahren das Hinzufügen von polaren Zugstangen (29) umfasst, die in einem Winkelsektor jedes Pols in Bezug auf eine Drehachse des Rotors verteilt sind, um die magnetische Masse zwischen den Halbwellen verdichtet zu halten und den Rotor in Drehung entsprechend den Lagern zu stabilisieren, wobei jeder Winkelsektor die gleiche Anzahl von polaren Zugstangen umfasst.

10. Verfahren nach Anspruch 9, wobei das Hinzufügen von polaren Zugstangen Folgendes umfasst:

- (a) Bestimmen einer Konfiguration von polaren Zugstangen (29), die eine festgelegte Anzahl von polaren Zugstangen, eine festgelegte Position der polaren Zugstangen in jedem Winkelsektor und eine festgelegte mechanische Vorspannung der polaren Zugstangen umfasst,
- (b) Bestimmen eines Bereichs instabiler Drehzahlen, in dem der von den Lagern (12) in Drehung gehaltene Rotor (11) gemäß einer ersten drehzahlabhängigen äquivalenten Steifigkeitsmatrix, einer zweiten drehzahlabhängigen äquivalenten Steifigkeitsmatrix, einer ersten Massenmatrix und einer zweiten Massenmatrix instabil sein kann, wobei die erste drehzahlabhängige äquivalente Steifigkeitsmatrix und die erste Massenmatrix aus einem ersten Rotormodell bestimmt werden, wobei die zweite drehzahlabhängige äquivalente Steifigkeitsmatrix und die zweite Massenmatrix aus einem zweiten Rotormodell bestimmt werden, wobei das erste Rotormodell entsprechend den Schlitzen (16), den Wicklungen (17), den Keilen (22) und den umlaufenden Zugstangen (29) bestimmt wird und das zweite Rotormodell entsprechend den umlaufenden Zugstangen und den polaren Zugstangen bestimmt wird,
- (c) Bestimmen einer absoluten Differenzmatrix zwischen einer ersten drehzahlabhängigen äquivalenten Dämpfungsmatrix und einer zweiten drehzahlabhängigen äquivalenten Dämpfungsmatrix, wobei die erste drehzahlabhängige äquivalente Dämpfungsmatrix von der ersten Massenmatrix und der ersten drehzahlabhängigen äquivalenten Steifigkeitsmatrix abhängt und die zweite drehzahlabhängige äquivalente Dämpfungsmatrix von der zweiten Massenmatrix und der zweiten drehzahlabhängigen äquivalenten Steifigkeitsmatrix abhängt,
- (d) Vergleichen der absoluten Differenzmatrix mit der drehzahlabhängigen Dämpfungsmatrix der Lager,

wobei der Rotor als instabil betrachtet wird, wenn die Nenndrehzahl des Rotors (11) im Bereich instabiler Drehzahlen liegt und ein Wert der absoluten Differenzmatrix größer ist als der entsprechende Wert der drehzahlabhängigen Dämpfungsmatrix der Lager (12), und der Rotor als stabil betrachtet wird, wenn die Nenndrehzahl des Rotors außerhalb des Bereichs instabiler Drehzahlen liegt oder ein Wert der absoluten Differenzmatrix größer ist als der entsprechende Wert der drehzahlabhängigen Dämpfungsmatrix der Lager.

11. Verfahren nach Anspruch 10, wobei, wenn der Rotor (11) als instabil betrachtet wird, eine neue Konfiguration der polaren Zugstangen bestimmt wird und die Schritte (b) bis (d) wiederholt werden, bis der Rotor als stabil betrachtet wird.

12. Verfahren nach Anspruch 10 oder 11, wobei das Bestimmen der ersten drehzahlabhängigen äquivalenten Steifigkeitsmatrix, der zweiten drehzahlabhängigen äquivalenten Steifigkeitsmatrix, der ersten Massenmatrix und der zweiten Massenmatrix Folgendes umfasst:

- Definieren des ersten Rotormodells, bei dem die Schlitze (16) gleichmäßig auf dem zweiten Durchmesser der magnetischen Masse angeordnet sind, wobei die Schlitze die Wicklungen (17) aufnehmen und von den Keilen (22) verschlossen werden,
- Bestimmen der Freimodusfrequenz des Vorwärtspräzessions-Gyroskopeffekts des ersten Rotors in Abhängigkeit von der Drehzahl des ersten Rotors,
- Bestimmen der ersten Massenmatrix des ersten Rotors,
- Bestimmen der ersten Rotorsteifigkeitsmatrix entsprechend der Freimodusfrequenz des Vorwärtspräzessions-Gyroskopeffekts des ersten Rotors und der ersten Massenmatrix,
- Definieren des zweiten Rotormodells, bei dem die Winkelsektoren über den gesamten Umfang des zweiten Rotormodells dupliziert sind, so dass die polaren Zugstangen (29) gleichmäßig auf einem vollständigen radialen Abschnitt des zweiten Rotormodells angeordnet sind,
- Bestimmen der Freimodusfrequenz des Vorwärtspräzessions-Gyroskopeffekts in Abhängigkeit von der Drehzahl des zweiten Rotors,

- Bestimmen einer zweiten Massenmatrix des zweiten Rotors,
- Bestimmen der zweiten Rotorsteifigkeitsmatrix entsprechend der Freimodusfrequenz des Vorwärtspräzessions-Gyroskopeffekts des zweiten Rotors und der zweiten Massenmatrix,

wobei die erste drehzahlabhängige äquivalente Steifigkeitsmatrix gleich der Summe aus der ersten Rotorsteifigkeitsmatrix und einer drehzahlabhängigen Steifigkeitsmatrix der Lager ist, und die zweite drehzahlabhängige äquivalente Steifigkeitsmatrix gleich der Summe aus der zweiten Rotorsteifigkeitsmatrix und einer drehzahlabhängigen Steifigkeitsmatrix der Lager ist.

13. Verfahren nach einem der Ansprüche 10 bis 12, wobei das Bestimmen eines Bereichs instabiler Drehzahlen das Bestimmen einer durchschnittlichen kreisförmigen natürlichen Pulsation und eines Rotor-Asymmetriekoeffizienten aus der ersten und der zweiten drehzahlabhängigen äquivalenten Steifigkeitsmatrix sowie der ersten und der zweiten Massenmatrix umfasst,

die untere Grenze des Bereichs gleich der durchschnittlichen kreisförmigen natürlichen Pulsation multipliziert mit der Quadratwurzel aus eins minus dem Rotor-Asymmetriekoeffizienten ist, und
wobei die obere Grenze des Bereichs gleich der durchschnittlichen kreisförmigen natürlichen Pulsation multipliziert mit der Quadratwurzel aus eins plus dem Rotor-Asymmetriekoeffizienten ist.

**Revendications**

1. Système comprenant un rotor (11) pour une machine électrique tournante (10) et des paliers (12) maintenant le rotor en rotation, le rotor étant un arbre non traversant comprenant deux demi-arbres (13) tenant étroitement une masse magnétique (14) cylindrique comprenant une pluralité de tôles empilées, des tirants circonférentiels (15) répartis uniformément sur un premier diamètre de la masse magnétique de manière à garder la masse magnétique compactée entre les demi-arbres, des fentes (16) disposées régulièrement sur des parties d'un second diamètre de la masse magnétique et s'étendant le long de la masse magnétique dans une direction axiale et fusionnant vers l'extérieur dans une direction radiale, des enroulements (17) contenus dans les fentes pour former au moins deux pôles magnétiques (P10, P11), chaque fente étant fermée par une cale (22),
dans lequel le rotor comprend en outre des tirants polaires (29) répartis dans un secteur angulaire de chaque pôle par rapport à un axe de rotation du rotor de manière à garder la masse magnétique compactée entre les demi-arbres et à stabiliser le rotor en rotation selon les paliers, chaque secteur angulaire comprenant le même nombre de tirants polaires.

2. Système selon la revendication 1, dans lequel les tirants polaires (29) sont répartis uniformément sur un premier diamètre de la masse magnétique dans chaque secteur angulaire.

3. Système selon la revendication 1 ou 2, dans lequel le rotor comprend quatre pôles.

4. Système selon l'une quelconque des revendications 1 à 3, dans lequel la masse magnétique comprend des tôles d'équilibrage (26, 27, 28) comportant une pluralité de trous situés sur une circonférence extérieure de la tôle d'équilibrage entre la pluralité de fentes (16).

5. Système selon la revendication 4, comprenant une tôle d'équilibrage (26, 27) à chaque extrémité de la masse magnétique et une tôle d'équilibrage (28) au milieu de la masse magnétique (14) selon une direction longitudinale du rotor.

6. Système selon l'une quelconque des revendications 1 à 5, dans lequel les paliers (12) comprennent des paliers magnétiques actifs.

7. Système selon l'une quelconque des revendications 1 à 5, dans lequel les paliers (12) comprennent des paliers à huile lubrifiés.

8. Machine électrique tournante (10) comprenant un système selon l'une quelconque des revendications 1 à 7.

9. Procédé pour améliorer la dynamique d'un système comprenant un rotor (11) à deux pôles pour une machine électrique tournante (10) et des paliers (12) maintenant le rotor en rotation, le rotor étant un arbre non traversant comprenant deux demi-arbres (13) tenant étroitement une masse magnétique (14) cylindrique comprenant une pluralité de tôles empilées, des tirants circonférentiels (15) répartis uniformément sur un premier diamètre de la masse magnétique de manière à garder la masse magnétique compactée entre les demi-arbres, des fentes (16) disposées régulièrement sur des parties d'un second diamètre de la masse magnétique et s'étendant le long de la masse magnétique dans une direction axiale et fusionnant vers l'extérieur dans une direction radiale, des enroulements (17) contenus dans les fentes pour former les deux pôles magnétiques (P10, P11), chaque fente étant fermée par une cale (22), dans lequel

le procédé comprend l'ajout de tirants polaires (29) répartis dans un secteur angulaire de chaque pôle par rapport à un axe de rotation du rotor de manière à garder la masse magnétique compactée entre les demi-arbres et à stabiliser le rotor en rotation selon les paliers, chaque secteur angulaire comprenant le même nombre de tirants polaires.

10. Procédé selon la revendication 9, dans lequel l'ajout de tirants polaires comprend :

- (a) la détermination d'une configuration de tirants polaires (29) comprenant un nombre prédéterminé de tirants polaires, un emplacement prédéterminé de tirants polaires dans chaque secteur angulaire et une prétension mécanique prédéterminée des tirants polaires,
- (b) la détermination d'un intervalle de vitesses de rotation instables dans lequel le rotor (11) maintenu en rotation par les paliers (12) peut être instable selon une première matrice de rigidité équivalente dépendant de la vitesse de rotation, une seconde matrice de rigidité équivalente dépendant de la vitesse de rotation, une première matrice de masse et une seconde matrice de masse, la première matrice de rigidité équivalente dépendant de la vitesse de rotation et la première matrice de masse étant déterminées à partir d'un premier modèle de rotor, la seconde matrice de rigidité équivalente dépendant de la vitesse de rotation et la seconde matrice de masse étant déterminées à partir d'un second modèle de rotor, le premier modèle de rotor étant déterminé selon les fentes (16), les enroulements (17), les cales (22) et les tirants circonférentiels (29), et le second modèle de rotor étant déterminé selon les tirants circonférentiels et les tirants polaires,
- (c) la détermination d'une matrice de différence absolue entre une première matrice d'amortissement équivalente dépendant de la vitesse de rotation et une seconde matrice d'amortissement équivalente dépendant de la vitesse de rotation, la première matrice d'amortissement équivalente dépendant de la vitesse de rotation étant dépendante de la première matrice de masse et de la première matrice de rigidité équivalente dépendant de la vitesse de rotation et la seconde matrice d'amortissement équivalente dépendant de la vitesse de rotation étant dépendante de la seconde matrice de masse et de la seconde matrice de rigidité équivalente dépendant de la vitesse de rotation,
- (d) la comparaison de la matrice de différence absolue à la matrice d'amortissement dépendant de la vitesse de rotation des paliers,

si la vitesse de rotation nominale du rotor (11) est dans l'intervalle de vitesses de rotation instables et qu'une valeur de la matrice de différence absolue est supérieure à la valeur correspondante de la matrice d'amortissement dépendant de la vitesse des paliers (12), le rotor est considéré comme instable, et si la vitesse de rotation nominale du rotor est en dehors de l'intervalle de vitesses de rotation instables ou si une quelconque valeur de la matrice de différence absolue est supérieure à la valeur correspondante de la matrice d'amortissement dépendant de la vitesse des paliers, le rotor est considéré comme stable.

11. Procédé selon la revendication 10, dans lequel si le rotor (11) est considéré comme instable, une nouvelle configuration de tirants polaires est déterminée et les étapes (b) à (d) sont répétées jusqu'à ce que le rotor soit considéré comme stable.

12. Procédé selon la revendication 10 ou 11, dans lequel la détermination de la première matrice de rigidité équivalente dépendant de la vitesse de rotation, de la seconde matrice de rigidité équivalente dépendant de la vitesse de rotation, de la première matrice de masse et de la seconde matrice de masse comprend :

- la définition du premier modèle de rotor dans lequel les fentes (16) sont disposées régulièrement sur le second diamètre de la masse magnétique, les fentes contenant les enroulements (17) et étant fermées par les cales (22),
- la détermination de la fréquence de mode libre d'effet gyroscopique de précession avant du premier rotor selon la vitesse de rotation du premier rotor,
- la détermination de la première matrice de masse du premier rotor,
- la détermination de la première matrice de rigidité de rotor selon la fréquence de mode libre d'effet gyroscopique de précession avant du premier rotor et la première matrice de masse,
- la définition du second modèle de rotor dans lequel les secteurs angulaires sont dupliqués sur la totalité de la périphérie du second modèle de rotor de sorte que des tirants polaires (29) soient disposés régulièrement sur une section radiale complète du second modèle de rotor,
- la détermination de la fréquence de mode libre d'effet gyroscopique de précession avant selon la vitesse de rotation du second rotor,
- la détermination d'une seconde matrice de masse du second rotor,
- la détermination de la seconde matrice de rigidité de rotor selon la fréquence de mode libre d'effet gyroscopique de précession avant du second rotor et la seconde matrice de masse,

la première matrice de rigidité équivalente dépendant de la vitesse de rotation étant égale à l'addition de la première matrice de rigidité de rotor et d'une matrice de rigidité dépendant de la vitesse des paliers, et la seconde matrice de rigidité équivalente dépendant de la vitesse de rotation étant égale à l'addition de la seconde matrice de rigidité de rotor et d'une matrice de rigidité dépendant de la vitesse des paliers.

13. Procédé selon l'une quelconque des revendications 10 à 12, dans lequel la détermination d'un intervalle de vitesses de rotation instables comprend la détermination d'une pulsation naturelle circulaire moyenne et d'un coefficient asymétrique de rotor à partir des première et seconde matrices de rigidité équivalentes dépendant de la vitesse de rotation et des première et seconde matrices de masse,

la limite inférieure de l'intervalle étant égale à la pulsation naturelle circulaire moyenne multipliée par la racine carrée de un moins le coefficient asymétrique de rotor, et la limite supérieure de l'intervalle étant égale à la pulsation naturelle circulaire moyenne multipliée par la racine carrée de un plus le coefficient asymétrique de rotor.

## FIG.1
## ART ANTERIEUR

1

3  P1

2

(A1)

4  P2

## FIG.2

10

12  11  14  12

13  13

(A)

FIG.3

FIG.4

# FIG.5

# FIG.6

# FIG.7

## FIG.8

## FIG.9

# FIG.10

**EP 4 195 457 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110080068 A
- US 4510679 A

- US 2064033 A